(19) Europäisches Patentamt
European Patent Office
Office européen des brevets

(11) **EP 4 057 094 B1**

(12) **EUROPÄISCHE PATENTSCHRIFT**

(45) Veröffentlichungstag und Bekanntmachung des Hinweises auf die Patenterteilung:
**25.10.2023 Patentblatt 2023/43**

(21) Anmeldenummer: **22158378.4**

(22) Anmeldetag: **24.02.2022**

(51) Internationale Patentklassifikation (IPC):
**G05B 23/02** *(2006.01)* **G01M 13/00** *(2019.01)*
**G01M 13/04** *(2019.01)*

(52) Gemeinsame Patentklassifikation (CPC):
**G01M 13/04; G01M 13/00; G05B 23/0221;**
**G05B 23/0235; G05B 23/0283**

(54) **VERFAHREN ZUR FESTSTELLUNG DES BEGINNS EINER VERSCHLEISSBEDINGTEN BAUTEIL-RESTNUTZUNGSDAUER EINES ELASTISCH VERFORMBAREN BAUTEILS, ALS STRUKTURTEIL UND/ODER LAGERTEIL EINES GERÄTS**

METHOD FOR DETERMINING THE START OF A WEAR-INDUCED STRUCTURAL REMAINING SERVICE LIFE OF AN ELASTICALLY DEFORMABLE COMPONENT, AS A STRUCTURAL PART AND / OR BEARING PART OF A DEVICE

PROCÉDÉ DE DÉTERMINATION DU DÉBUT D'UNE DURÉE D'UTILITÉ RÉSIDUELLE DE COMPOSANT DÉPENDANT DE L'USURE D'UN COMPOSANT DÉFORMABLE DE MANIÈRE ÉLASTIQUE, EN TANT QUE PARTIE STRUCTURALE ET/OU PARTIE DE PALIER D'UN APPAREIL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.03.2021 DE 102021105643**

(43) Veröffentlichungstag der Anmeldung:
**14.09.2022 Patentblatt 2022/37**

(73) Patentinhaber: **Jörn GmbH**
**71336 Waiblingen (DE)**

(72) Erfinder: **Boegler, Dorothee**
**71409 Schwaikheim (DE)**

(74) Vertreter: **Liebl, Thomas**
**Neubauer - Liebl - Bierschneider - Massinger**
**Münchener Straße 49**
**85051 Ingolstadt (DE)**

(56) Entgegenhaltungen:
**EP-B1- 3 358 332     DE-B3-102017 003 249**
**JP-A- H11 247 951**

**Beschreibung**

Die Erfindung betrifft ein Verfahren zur Feststellung des Beginns einer verschleißbedingten Bauteil-Restnutzungsdauer eines elastisch verformbaren Bauteils als Strukturteil und/oder Lagerteil eines Geräts.

Es handelt sich hier um Geräte, bei denen auf elastisch verformbare Bauteile als Strukturteile und/oder Lagerteile, insbesondere auf Gummi-Metall-Lager im Betrieb abhängig von wechselnden Betriebszuständen unterschiedliche, zeitlich aufeinanderfolgende, insbesondere periodische Verformungskräfte einwirken, die letztendlich zu einem die Bauteilnutzungsdauer begrenzenden Bauteilverschleiß führen.

Der Begriff "Gerät" ist hier allgemein zu verstehen und weit auszulegen, wobei ortsfeste Maschinen ebenso wie Fahrzeuge umfasst sein sollen, die betriebsbedingt externen Kräften ausgesetzt sind und/oder selbst Kräfte erzeugen, die zu den Bauteil-Verformungen führen.

Auch der Begriff "Gummi-Metall-Lager" ist, wie in Fachkreisen üblich, allgemein zu verstehen und weit auszulegen, wobei unter "Gummi" auch allgemein ein "Elastomermaterial" und unter "Metall" auch allgemein ein verformungssteifes Lagerbauteil insbesondere auch ein verformungssteifes Lagerbauteil aus Kunststoff verstanden werden kann.

Elastisch verformbare Bauteile solcher Geräte können insbesondere Elastomerlager, insbesondere Gummi-Metall-Lager und/oder gegebenenfalls auch Kunststoffteile, insbesondere Faserverbundteile sein. Bekanntlich sind solche Bauteile bei richtiger Auslegung über eine lange Nutzungsdauer meist über mehrere Jahre auch bei hohen oszillierenden Belastungen funktionssicher und im Prinzip verschleiß- und wartungsfrei. Ein Kriterium für die Funktion eines solchen Bauteils ist die Größe einer rückstellenden Verformung bei einer bestimmten Krafteinwirkung bzw. die entsprechende Bauteilsteifigkeit.

An Muster-Bauteilen solcher Geräte und/oder an Kontroll-Bauteilen einer Serie wird in bekannter Weise die Bauteilnutzungsdauer auf einem Prüfstand bei klar definierten Verhältnissen gemessen. Dazu wird beispielsweise ein Gummi-Metall-Lager mit oszillierenden Belastungen beaufschlagt. Es werden die Lastwechsel oder sich wiederholende Lastblöcke gezählt und dabei werden sowohl die Kraft als auch die zugeordnete Verformung gemessen, wobei einer der beiden Werte vorgegeben wird. Daraus wird ein Diagramm als Messkurve erzeugt, in dem eine abfallende Steifigkeit bei steigender Zahl der Lastwechsel erkennbar ist. Die Zahl der Lastwechsel ist unmittelbar als Nutzungsdauer interpretierbar. Aus einem solchen Diagramm ist jeweils im Laufe der Nutzungsdauer eine Zunahme der Verformung entsprechend einem Abfall der Steifigkeit in charakteristischen drei Zeitbereichen erkennbar. Im ersten Zeitbereich (A) fällt die Steifigkeit sehr schnell ab, was durch Fließen und Setzen bedingt ist. Anschließend wird über eine vergleichsweise sehr lange Nutzungsdauer in einem zweiten Zeitbereich (B) nur ein sehr geringer Abfall der Steifigkeit festgestellt. Daran schließt sich in einem dritten Zeitbereich (C) ein progressiver Abfall der Steifigkeit an, welcher ein nahes verschleißbedingtes Ende der Bauteilfunktion mit einem möglichen Ausfall und damit ein Ende der Nutzungsdauer markiert.

Der Grund für dieses mit einem Prüfstand messbare Verhalten insbesondere eines Gummi-Metall-Lagers liegt darin, dass bei dauernden hohen oszillierenden Belastungen durch aufgezwungene Verformungen Molekülketten im Gummi aufreißen und sich Risse bilden, die sich im Zuge der fortschreitenden Ermüdung weiter ausbreiten. Insbesondere im dritten Zeitbereich (C) führt die Schädigung zu einer progressiven Rissausbreitung und damit zu einem progressiven Abfall der Steifigkeit, welcher das nahe Ende der Nutzungsdauer bis zu einem Bauteildefekt markiert. Ausgehend von Messungen der Nutzungsdauer an Muster-Bauteilen auf einem Prüfstand wird dann mit Sicherheitsabschlägen für fertigungsbedingte Toleranzen und differierende reale Bauteilbelastungen eine Nutzungsdauer für Serienteile im Einbauzustand abgeschätzt und angegeben. Übliche typische und charakteristische Nutzungsdauern entsprechend des ersten und zweiten Zeitbereichs (A, B) liegen üblich in der Größenordnung von 6 bis 10 Jahren. Wenn der dritte Zeitbereich (C) als Versagensgrenze mit einem Beginn einer vorgebbaren Bauteil-Restnutzungsdauer erreicht ist, muss zwar ein Gummi-Metall-Lager zeitnah ausgetauscht werden, kann aber noch über mehrere Wochen, gegebenenfalls Monate bis zu einem Totalausfall weiter verwendet werden.

Ähnlich dem vorstehend in Verbindung mit einem Gummi-Metall-Lager erläuterten Steifigkeitsverlauf bzw. einer Rissausbreitung verhält sich bei entsprechenden Belastungen üblicherweise auch der Steifigkeitsverlust eines Kunststoffteils, insbesondere eines Faserverbundbauteils, bei dem sich durch oszillierende Belastungen und erzwungene Verformungen der Faserverbund durch eine fortschreitende Rissausbreitung lockert und sich schließlich auflöst.

Bei vielen Anwendungen solcher Bauteile kann eine Versagensgrenze als beginnendes Ende der Nutzungsdauer einfach erkannt werden, beispielsweise durch eine veränderte Geräuschentwicklung oder bei leicht zugänglichen Einbausituationen gegebenenfalls optisch an Rissbildungen.

Bei vielen Anwendungen sind jedoch ausfallkritische, elastisch verformbare Bauteile so verbaut, dass eine einfache, insbesondere optische Kontrolle nicht möglich ist. Ein Bauteilschaden kann dann zu einem Sicherheitsrisiko oder zu teuren Folgeschäden und Betriebsausfällen führen. Beispielsweise finden sich solche Einbausituationen bei Wagons und Lokomotiven von Zügen, bei Fluggeräten, Windenergieanlagen und Schiffen. Gerade für solche Einsatzfälle werden bisher relevante Muster-Bauteile im Vorfeld an Prüfständen getestet und mit gemessenen Belastungsdaten eine maximale Laufzeit abgeschätzt und festgelegt, nach der sie unter Berücksichtigung einer normalen Streuung und mit großen Sicherheitsabschlägen meist lange vor einer möglichen Lebensdauer getauscht werden.

Nachteilig muss für einen solche, durch eine Lebensdauerabschätzung an Musterbauteilen bedingten, präventiven Tausch eines solchen elastisch verformbaren Bauteils in regelmäßigen Wartungsintervallen das Gerät, zum Beispiel ein Fahrzeug oder eine Maschine außer Betrieb gesetzt werden. Um ein Sicherheitsrisiko und Folgeschäden auszuschließen, muss ein Bauteiltausch deutlich vor einer im Mittel möglichen Nutzungsdauer erfolgen. Dies führt zu hohen Ausfall-, Bauteil- und Wartungskosten, die noch nicht durch den aktuellen und noch funktionssicheren Bauteilzustand erforderlich wären. Da in einem Gerät regelmäßig mehrere solcher Bauteile, beispielsweise mehrere Gummi-Metall-Lager verbaut sind, vervielfachen sich die Kosten entsprechend.

Die vorstehend erläuterten, allgemein bekannten Lebensdauerabschätzungen anhand von prüfstandsvermessenen Musterbauteilen erfolgen insbesondere für Serienbauteile, beispielsweise für Gummi-Metall-Lager von Nutzfahrzeugen, da Messanordnungen, wie auf einem Prüfstand zur gleichzeitigen Messung von Belastungen und damit verbundenen Verformungen an den verbauten und betriebsmäßig eingesetzten Serienbauteilen in der Regel nicht möglich sind und/oder aufwändig wären.

Es ist bereits ein Verfahren bekannt (JP H11247951 A), mit dem bei einem bevorstehenden Ende einer Lebensdauer eines Zahnriemens, insbesondere bei einer Verwendung mit einer Brennkraftmaschine ein Warnsignal abgegeben wird. Dazu werden Temperaturmessungen des Zahnriemens jeweils ab Beginn einer Laufzeit während der Laufdauer durchgeführt und in einem zweistufigen Prozess mit zwei Kriterien ausgewertet, wobei beim Start eine anfängliche Zahnriementemperatur und anschließend ein Temperaturanstieg als Temperaturgradient gemessen wird. Wenn dieser Temperaturanstieg einen vorgegebenen Grenzwert überschreitet, wird eine Temperaturdifferenz zwischen der Zahnriementemperatur und einer Basistemperatur ermittelt und wenn diese einen weiteren vorgegebenen Grenzwert überschreitet wird ein Warnsignal abgegeben.

Zudem ist ein gattungsgemäßes Verfahren (EP 3 358 332 B1) zur Bestimmung des Beginns einer verschleißbedingten Restnutzungsdauer eines elastisch verformbaren Bauteils bekannt, wobei unterschiedliche Verformungskräfte zu einem die Bauteilnutzungsdauer begrenzenden Bauteilverschleiß führen. Dabei wird ein sich zeitversetzt wiederholender, jeweils gleicher Betriebszustand vorbestimmt, dem jeweils eine gleiche Verformungskraft zugeordnet ist. Mit einer Mess- und Auswerteeinrichtung wird während des Betriebs jeweils ein solcher vorbestimmter Betriebszustand erkannt und ein Messvorgang gestartet, wobei eine Bauteiltemperatur nach einem ausgeglichenen Temperaturzustand als Kenngröße gemessen und aufeinanderfolgende Messgrößen in einer Messkurve gespeichert werden. Wenn sich über eine relativ lange Nutzungsdauer gespeicherte Kenngrößen-Messwerte als Kenngrößen für eine Bauteilsteifigkeit nicht oder nur wenig in einem Plateaubereich ändern, ist eine weitgehend gleichbleibende Bauteilsteifigkeit und damit eine weitere sichere Bauteilfunktion festgestellt. Wenn dagegen daran anschließend in einer relativ kurzen Nutzungsdauer nacheinander erfasste Kenngrößen-Messwerte sukzessiv und progressiv bei stark ansteigender Messkurve größer werden, entsprechend einer progressiven Abnahme der Bauteilsteifigkeit, wird nach Erreichen eines vorgebbaren Schwellwerts eine Versagensgrenze mit dem Beginn einer verschleißbedingten Bauteil-Restnutzungsdauer festgestellt und eine Warninformation ausgegeben. Zudem kann hier ein Differenz-Temperaturwert zwischen einer Bauteil-Betriebstemperatur und einer Umgebungstemperatur für eine Auswertung verwendet werden.

Eine Schwachstelle des vorstehenden Verfahrens besteht darin, dass eine Messung und Auswertung nur durchgeführt wird, wenn der vorbestimmte Betriebszustand mit dem zugeordneten Belastungszustand vorliegt, da alle anderen Betriebszustände für Messungen und Auswertungen nicht berücksichtigt werden. Wenn der vorbestimmte Betriebszustand betriebsbedingt nur wenig oft oder gegebenenfalls über eine längere Zeitspanne nicht auftritt, stehen nur wenige oder möglicherweise keine Messungen für eine Auswertung zur Verfügung. Insbesondere für einen solchen Fall und/oder bei größeren Messwertschwankungen und Messwertsprüngen können sich bei der vorgenommenen Differenzialbetrachtung der Temperatur über der Zeit Fehlinterpretationen ergeben. Obwohl dieses Verfahren für bestimmte Anwendungen zu verwertbaren Bestimmungen von Versagensgrenzen einsetzbar ist, sind jeweils die Einsatzbedingungen zu überprüfen und ein universeller Einsatz ist nur bedingt möglich.

Aufgabe der Erfindung ist es, ein relativ einfaches und kostengünstiges sowie für eine Vielzahl von Anwendungsfällen einsetzbares Verfahren zur Feststellung des Beginns einer verschleißbedingten Restnutzungsdauer eines in einem Gerät verbauten, elastisch verformbaren Bauteils als Strukturteil und/oder Lagerteil vorzuschlagen.

Diese Aufgabe wird mit den Merkmalen des Anspruchs 1 gelöst. Vorteilhafte Ausgestaltungen sind Gegenstand der darauf rückbezogenen Unteransprüche.

Gemäß Anspruch 1 wirken auf das elastisch verformbare Bauteil im Betriebsverlauf unterschiedliche, zeitlich aufeinanderfolgende, insbesondere periodische Verformungskräfte, die zu einem die Bauteilnutzungsdauer begrenzenden Bauteilverschleiß führen. Das Gerät ist mit einer Einrichtung zur Feststellung des Beginns einer verschleißbedingten Bauteil-Restnutzungsdauer als Versagensgrenze ausgerüstet. Dazu wird betriebsmäßig jeweils eine Bauteiltemperatur ($T_B$) und eine Umgebungstemperatur (Tu) gemessen und daraus eine Differenztemperatur ($T_D$) als Relativtemperatur berechnet.

Erfindungsgemäß wird die Differenztemperatur ($T_D$) kontinuierlich über die Zeit (t) gemessen und der Differenztemperatur-Messwert in einer Differenztemperatur-Messkurve erfasst. Die betriebs- und belastungsbedingten Differenztemperatur-Schwankungen werden in der Differenztemperatur-Messkurve mittels einer Filtereinheit als Fit-Einheit gefittet, das heißt ausgeglichen und geglättet, wonach dann eine gleichmäßig verlaufende Fit-Differenztemperatur-Messkurve generiert wird.

Mit einer Integrationseinheit wird der Integralwert über die Fit-Differenztemperatur-Messkurve von einem initialen Start-Zeitpunkt bis zu einem aktuellen Kontroll-Zeitpunkt gebildet. Als Kontroll-Zeitpunkt kann damit jeder beliebige, insbesondere ein gerade aktueller Zeitpunkt während der Bauteilnutzungsdauer verwendet werden, das heißt dass eine Kontrolle der Versagensgrenze kontinuierlich fortlaufend zu jedem Zeitpunkt durchgeführt wird.

Es hat sich gezeigt, dass sich beabstandet vor einer Versagensgrenze in einem, zum Beispiel experimentell festgestellten, in jedem Fall sicheren Nutzungsdauer-Zeitraum ein linearer Verlauf des Integralwerts als Integral-Gerade mit einer bestimmten, gleichbleibenden Steigung ergibt. Zudem wird eine weitere Gerade generiert, in dem zu jedem Integralwert, beziehungsweise zur Integralwert-Geraden ein vorbestimmter Kontroll-Grenzwert addiert wird, so dass eine lineare Grenzwert-Gerade entsteht, die zeitlich vor einer Versagensgrenze parallel mit gleicher Steigung und um den Grenzwert beabstandet über der Integralwert-Geraden liegt.

Die Grenzwert-Gerade wird mittels einer Rechen- und Vergleichereinheit mit der gleichen, im sicheren Nutzungsdauer-Zeitraum ermittelten Steigung und linearen Verlauf über die gesamte Kontrollzeit unverändert weitergeführt. Dagegen verlässt die Intergralwert-Gerade bei einer Annäherung an die Versagensgrenze mit einer Zunahme ihrer Steigung den linearen Verlauf.

Während der gesamten Beobachtungszeit werden die Grenzwert-Gerade und die Integralwert-Gerade verglichen. Wenn sich dann an einem kritischen Zeitpunkt die Integralwert-Gerade mit der Grenzwert-Geraden schneiden, ist eine Versagensgrenze als Beginn einer verschleißbedingten Bauteil-Restnutzungsdauer erreicht und es wird ein entsprechendes Warnsignal ausgegeben.

Beim erfindungsgemäßen Verfahren ist es somit nicht erforderlich, die Verformungskräfte messtechnisch zahlenmäßig genau, wie auf einem Prüfstand zu erfassen und entsprechende Temperaturerhöhungen auszuwerten. Erfindungsgemäß wird dagegen ein Verlauf der Verformungskräfte innerhalb einer einbau- und betriebsbedingten Bandbreite angenommen, wodurch sich über die vorliegende Langzeitbetrachtung in Verbindung mit der Integration und Fittung ein Ausgleich von Schwankungen mit einem entsprechend linearen Verlauf der Differenztemperatur-Messkurve ergibt. Der Verlaufstrend der gefitteten Fit-Differenztemperatur-Messkurve wird zur Bestimmung der Versagensgrenze in einer Relativbetrachtung ohne zahlenmäßige Kenntnis der Größe der Verformungskräfte ausgewertet. Damit ist das erfindungsgemäße Verfahren insbesondere besonders vorteilhaft einsetzbar für unzugängliche Einbauten von elastisch verformbaren und verschleißkritischen Bauteilen.

Die auf ein verbautes Bauteil einwirkenden Verformungskräfte bewegen sich innerhalb einer Bandbreite, die insbesondere für die Auslegung und die Dimensionierung des Bauteils vorgegeben ist und/oder gegebenenfalls experimentell ermittelt werden kann. Entsprechend liegen die Differenztemperatur-Messwerte ebenfalls in einer zugeordneten Messwert-Bandbreite. Größere oder kleinere Differenztemperaturwerte außerhalb dieser Bandbreite, die insbesondere auf singuläre Ereignisse mit extremen Bedingungen zurückgehen können, sollen in einer Weiterbildung des Verfahrens auf Bandbreitenwerte reduziert werden, um eine möglichst gleichmäßige Fit-Differenztemperatur-Messkurve zu erhalten.

Eine weitere Maßnahme zur Verbesserung des Verfahrens besteht darin, dass in erfassten Zeiträumen ohne Verformungskräfte auf das elastische Bauteil, insbesondere bei großen Stillstands- und/oder Abschaltzeiten, keine Differenztemperatur-Messkurve mit anschließender Integration erstellt wird.

Das erfindungsgemäße Verfahren kann während der gesamten Nutzungs- und Lebensdauer des Bauteils durchgeführt werden, so dass zu jedem Zeitpunkt ununterbrochen festgestellt wird, ob bereits eine Versagensgrenze erreicht ist. Die dazu erforderliche relativ große Speicher- und Rechenleistung kann mit der derzeitig verfügbaren Elektronik einfach und kostengünstig bewältigt werden.

Alternativ kann das Verfahren je nach Anwendung und Einsatz auch periodisch betrieben werden, dergestalt dass eine Differenztemperaturmessung mit anschließender Erstellung einer Fit-Differenztemperatur-Messkurve und deren Integration innerhalb aufeinanderfolgender vorgegebener Zeitfenster mit dazwischenliegenden mess- und/oder auswertungsfreien Zwischen-Zeitabständen erfolgt. Die über die Länge eines Zeitfensters jeweils berechneten Integralwerte werden dann kumulativ addiert, wobei in der Integralwert-Geraden die Zwischen-Zeitabstände auf der Zeitachse nicht berücksichtigt werden.

Beispielsweise kann bei einem Bauteileinsatz in der Bahnindustrie ein Gummi-Metall-Lager in einem Drehgestell als Wankstützlager oder Lenklager verbaut und das erfindungsgemäße Verfahren in einem Zeitfenster von etwa 1 bis 3 Stunden pro Tag mit entsprechenden Zwischen-Zeitabständen durchgeführt werden.

In an sich bekannter Weise erfolgt nach einer ersten Bauteil-Inbetriebnahme bzw. nach dem ersten Aufbringen einer Verformungskraft ein anfänglich starker Steifigkeitsabfall der Bauteilsteifigkeit, der insbesondere durch Fließen und Setzen bedingt ist. Bei Prüfstandsmessungen an Musterbauteilen kann die dafür erforderliche Zeit erfasst und/oder aus Erfahrungswerten abgeschätzt werden. Diese Zeit liegt jedenfalls in einem kurzen Anfangs-Zeitbereich einer sicheren Bauteilnutzungszeit und soll beim erfindungsgemäßen Verfahren nicht berücksichtigt werden, um hier mögliche Fehlinterpretationen auszuschließen. Der initiale Start-Zeitpunkt für den Verfahrensstart zur Bestimmung einer Versagensgrenze soll somit zeitlich um eine Wartezeit versetzt nach einer ersten Bauteilinbetriebnahme festgelegt werden, wobei nach der Wartezeit der anfänglich starke Steifigkeitsabfall der Bauteilsteifigkeit beendet ist.

Zusätzlich zum Warnsignal beim Erreichen der Versagensgrenze kann auch noch eine Information über eine weitere, noch unkritische Bauteil-Restnutzungsdauer für eine Weiterbenutzung bis zu einem zwingenden Austausch des Bauteils ausgegeben werden.

Ein Warnsignal kann in an sich bekannter Weise als optisches und/oder akustisches und/oder als digitales Signal zur Weiterverarbeitung in einem Steuerungssystem ausgegeben werden.

Die Bauteiltemperatur kann mit einer an sich bekannten Temperatursensorik am oder im Bauteil und entsprechend die Umgebungstemperatur mit einer Temperatursensorik im Nahbereich des Bauteils gemessen werden.

Die zur verfahrensgemäßen Auswertung erforderlichen Einheiten werden vorzugsweise örtlich vom Bauteil beabstandet ganz oder zumindest zum Teil in einer Recheneinheit als Zentralelektronik des Geräts angeordnet, wobei eine Messwerteübertragung kabelgebunden oder kabellos erfolgen kann.

Anhand einer Zeichnung wird das Verfahren weiter erläutert.

Es zeigen:

Figur 1    eine schematische Darstellung einer Rissausbreitung entsprechend einer Steifigkeitsreduzierung im Elastomermaterial eines Bauteils,

Figur 2    ein beispielhaftes Diagramm einer erfassten Differenztemperatur-Messkurve mit einer Fit-Differenztemperatur-Messkurve,

Figur 3    ein Diagramm der Fit-Differenztemperatur-Messkurve mit Integralwerten,

Figur 4    ein Diagramm der kumulierten Integralwerte in einer Integralwert-Geraden und eine Grenzwert-Gerade.

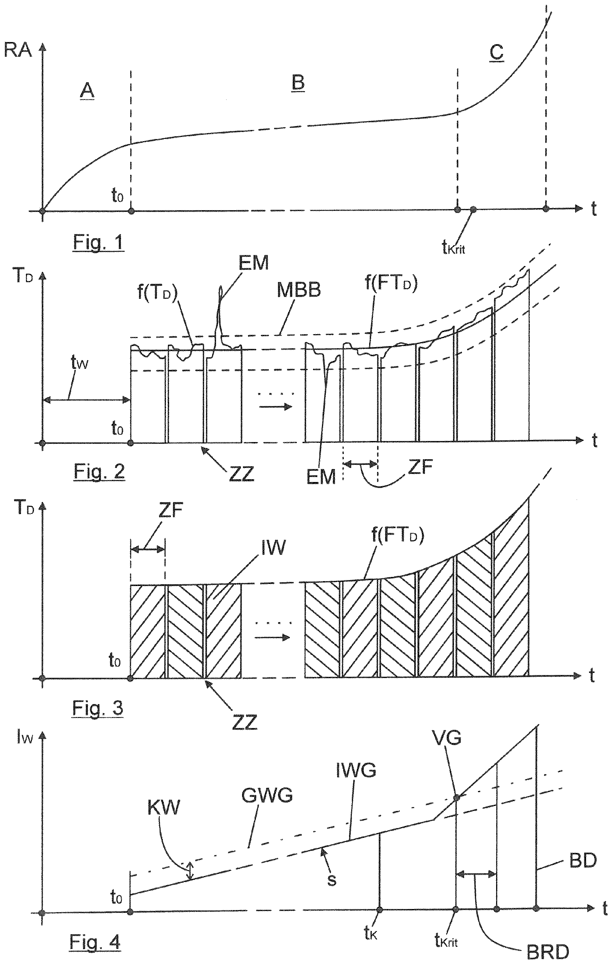

In Figur 1 ist schematisch der übliche und allgemein bekannte Verlauf einer belastungs- und verschleißbedingten Rissausbreitung in einem Elastomermaterial eines elastisch verformbaren Bauteils über die gesamte Lebensdauerzeit dargestellt. Ersichtlich steigt in einem ersten Bereich A die Rissausbreitung RA innerhalb eines relativ kurzen Zeitbereichs schnell an und verläuft anschließend in einem Zeitbereich B sehr lange mit nur einem geringen Anstieg. In einem anschließenden relativ kurzen Zeitbereich C nimmt dann die Rissausbreitung RA bis zu einem endgültigen Bauteilausfall schnell und exponentiell zu. Der Zunahme der Rissausbreitung entspricht einer Abnahme der Bauteilsteifigkeit.

Die Darstellung im Diagramm nach Figur 1 ist hinsichtlich der Zeit nicht maßstabsgetreu, da die Zeitbereiche A und C im Vergleich zum Zeitbereich B sehr kurz sind und der Zeitbereich B eine vergleichsweise sehr lange Nutzungsdauer über viele Jahre eines elastisch verformbaren Bauteils, beispielsweise eines Gummi-Metall-Lagers, darstellt. Dieser vergleichsweise lange Zeitraum ist durch die strichliert unterbrochene Zeitachse in den Diagrammen ausgedrückt.

In Figur 2 ist ein Diagramm gezeigt, in dem nach einem initialen Start-Zeitpunkt $t_0$ nach dem Bereich A, entsprechend einer Wartezeit tw das erfindungsgemäße Verfahren gestartet wurde mit Messungen und Auswertungen in vorgegebenen Zeitfenstern ZF und mit im Diagramm nicht berücksichtigten Zwischen-Zeitabständen ZZ. Zeitfenster können beispielsweise hier eine Länge von 2 Stunden mit 22 Stunden Zwischen-Zeitabständen ZZ pro Tag aufweisen.

In den Zeitfenstern ZF wird jeweils kontinuierlich eine Differenztemperatur $T_D$ aus einer gemessenen Bauteiltemperatur $T_B$ und einer Umgebungstemperatur Tu gebildet und als Differenztemperatur-Messkurve $f(T_D)$ ausgegeben. Zugleich wird hier eine zulässige Messwertbandbreite MBB berücksichtigt, wobei darüber nach oben oder unten ausschlagende Extrem-Messwerte EM auf Bandbreiten-Messewerte reduziert werden.

Wie in Figur 2 dargestellt, wird die Differenztemperatur-Messkurve $f(T_D)$ mittels einer Filtereinheit als Fit-Einheit gefittet, das heißt ausgeglichen und geglättet dergestalt, dass die dargestellte gleichmäßig verlaufende Fit-Differenztemperatur-Messkurve $f(FT_D)$ generiert wird.

In Figur 3 ist entsprechend Figur 2 wiederum die Fit-Differenztemperatur-Messkurve $f(FT_D)$ mit den Zeitfenstern ZF und den (unberücksichtigten) Zwischen-Zeitabständen ZZ gezeigt. Die schraffierten Flächen unter der Fit-Differenztemperatur-Messkurve entsprechen jeweils berechneten Integralwerten.

Die Integralwerte werden kumulativ addiert, wodurch sich im Diagramm nach Figur 4 eine Integralwert-Gerade IWG mit einer Steigung S im sehr langen Zeitbereich B ergibt. Über den Verlauf der Integralwert-Geraden IWG wird jeweils ein Kontroll-Grenzwert KW addiert, so dass sich mit gleicher Steigung S über der Integralwert-Geraden IWG eine Grenzwert-Gerade GWG ergibt, die mit strichpunktierter Linie eingezeichnet ist und virtuell mit gleicher Steigung S über den Zeitbereich B hinaus in den Zeitbereich C weitergeführt ist.

So lange die Grenzwert-Gerade GWG zu einem beliebigen Kontroll-Zeitpunkt $t_K$ über der Integralwert-Geraden IWG liegt, ist sichergestellt, dass das Bauteil in einem unkritischen Zeitbereich vor einer Versagensgrenze VG betrieben wird. Bei einer Annäherung an die Versagensgrenze VG steigt die Integralwert-Gerade IWG mit zunehmender Steigung schnell an und schneidet an einem kritischen Zeitpunkt $t_{krit}$ die Grenzwert-Gerade GWG. Damit ist festgestellt, dass die Versagensgrenze VG mit einem Beginn einer verschleißbedingten Bauteil-Restnutzungsdauer BRD erreicht ist. Am kritischen Zeitpunkt $t_{krit}$ wird ein Warnsignal und zugleich eine Information über die mögliche Bauteil-Restnutzungsdauer BRD bis zu einem zwingenden Bauteilaustausch ausgegeben. Wird das Bauteil nicht ausgetauscht, würde sich der dargestellte weitere Anstieg der Integralwert-Geraden IWG ergeben, bis das Bauteil mit einem Bauteildefekt BD ausfällt.

Bezugszeichenliste

| | |
|---|---|
| $T_B$ | Bauteiltemperatur |
| $T_U$ | Umgebungstemperatur |
| $T_D$ | Differenztemperatur |
| t | Zeit |
| $f(T_D)$ | Differenztemperatur-Messkurve |
| $f(FT_D)$ | Fit-Differenztemperatur-Messkurve |
| IW | Integralwert |
| $t_0$ | Start-Zeitpunkt |
| $t_k$ | Kontroll-Zeitpunkt |
| IWG | Integralwert-Gerade |
| S | Steigung |
| KW | Kontroll-Grenzwert |
| GWG | Grenzwert-Gerade |
| VG | Versagensgrenze |
| $t_{krit}$ | kritischer Zeitpunkt |
| ZF | Zeitfenster |
| ZZ | Zwischen-Zeitabstände |
| MBB | Messwert-Bandbreite |
| tw | Wartezeit |
| EM | Extrem-Messwerte |
| RA | Rissausbreitung |
| BD | Bauteildefekt |
| BRD | Bauteil-Restnutzungsdauer |
| A | erster Bereich |
| B | zweiter Bereich |
| C | dritter Bereich |

**Patentansprüche**

1. Verfahren zur Feststellung des Beginns einer verschleißbedingten Bauteil-Restnutzungsdauer als Versagensgrenze eines elastisch verformbaren Bauteils, als Lagerteil und/oder Strukturteil eines Geräts, wobei auf das elastisch verformbare Bauteil im Betriebsverlauf unterschiedliche, zeitlich aufeinanderfolgende, insbesondere periodische Verformungskräfte einwirken, die zu einem die Bauteilnutzungsdauer begrenzenden Bauteilverschleiß führen und das Gerät mit einer Einrichtung zur Bestimmung der Bauteilnutzungsdauer, insbesondere zur Kontrolle und Feststellung des Beginns einer verschleißbedingten Bauteil-Restnutzungsdauer als Versagensgrenze (VG) ausgerüstet ist,

wobei durch die im Betrieb einwirkenden Verformungskräfte das Bauteil jeweils entsprechend verformt wird, so dass durch Walkarbeit ein Energieeintrag erfolgt, der eine Bauteil-Erwärmung bewirkt und dass eine aktuelle Bauteiltemperatur ($T_B$) und dazu im Abstand zum Bauteil eine aktuelle Umgebungstemperatur (Tu) gemessen wird,
aus den Messwerten der Bauteiltemperatur ($T_B$) und der Umgebungstemperatur (Tu) wird durch Subtraktion ein Messwert für eine aktuelle Differenztemperatur ($T_D$) als Relativtemperatur gebildet, die in der Einrichtung zur Feststellung einer Versagensgrenze (VG) ausgewertet wird,
**dadurch gekennzeichnet,**
**dass** die Differenztemperatur ($T_D$) kontinuierlich über die Zeit (t) gemessen wird und der Differenztemperatur-Messwert in einer Differenztemperatur-Messkurve ($f(T_D)$) erfasst wird,
**dass** betriebs- und belastungsbedingte Differenztemperatur-Schwankungen in der Differenztemperatur-Messkurve ($f(T_D)$) mittels einer Filtereinheit als Fit-Einheit gefittet, das heißt ausgeglichen und geglättet werden, dergestalt dass eine Fit-Differenztemperatur-Messkurve ($f(FT_D)$) generiert wird,
**dass** mit einer Integrationseinheit der Integralwert (IW) über die Fit-Differenztemperatur-Messkurve ($f(FT_D)$) von einem initialen Start-Zeitpunkt ($t_0$) bis zu einem aktuellen Kontroll-Zeitpunkt ($t_K$)

$$\int_{t_0}^{t_k} f(FT_D) = IW$$

gebildet wird, wodurch sich in einem, insbesondere experimentell feststellbaren, sicheren Nutzungsdauer-Zeitraum beabstandet vor einer Versagensgrenze (VG) über die beobachtete Mess- und Integrationszeit als Kontrollzeit ein linearer Verlauf des Integralwerts (IW) als Integralwert-Gerade (IWG) mit einer bestimmten, gleichbleibenden Steigung (S) ergibt und gespeichert wird,
**dass** mit einer Rechen- und Vergleichereinheit zu jedem Integralwert (IW) oder entsprechend zur Integralwert-Geraden (IWG) ein vorbestimmter Kontroll-Grenzwert (KW) addiert wird zu einer linearen Grenzwert-Geraden (GWG), die zeitlich beabstandet vor einer Versagensgrenze (VG) parallel mit gleicher Steigung (S) und um den Grenzwert (GW) beabstandet über der Integralwert-Geraden (IWG) im sicheren Nutzungsdauer-Zeitraum liegt, wobei die Grenzwert-Gerade (GWG) in der Rechen- und Vergleichereinheit mit dem gleichen, im sicheren Nutzungsdauer-Zeitraum ermittelten linearen Verlauf mit der gleichen Steigung (S) über die gesamte Kontrollzeit gespeichert weitergeführt wird und die Integralwert-Gerade (IWG) bei einer Annäherung an die Versagensgrenze (VG) mit einer Zunahme der Steigung (S) den linearen Verlauf verlässt, und

**dass** durch Vergleich an einem kritischen Zeitpunkt ($t_{krit}$) ein Schnitt der Grenzwert-Geraden (GWG) mit der Integralwert-Geraden (IWG) und damit eine erreichte Versagensgrenze (VG) festgestellt wird und ein Warnsignal ausgegeben wird.

2. Verfahren nach Anspruch 1, **dadurch gekennzeichnet,**

   **dass** für die Differenztemperatur-Messwerte eine bestimmte, zulässige Messwert-Bandbreite (MBB) vorgegeben wird, und
   **dass** größere oder kleinere Differenztemperatur-Messwerte auf Bandbreitenwerte reduziert werden.

3. Verfahren nach Anspruch 1 oder Anspruch 2, **dadurch gekennzeichnet, dass** in Zeiträumen ohne Verformungskräfte auf das elastische Bauteil, insbesondere in Stillstands- und/oder Abschaltzeiten des Geräts keine Differenztemperatur-Messkurve (f($T_D$) mit anschließender Integration erstellt wird.

4. Verfahren nach einem der Ansprüche 1 bis 3, **dadurch gekennzeichnet,**

   **dass** eine Differenztemperatur-Messung mit anschließender Erstellung einer Fit-Differenztemperatur-Messkurve (f($FT_D$) und deren Integration innerhalb aufeinanderfolgender, vorgegebener Zeitfenster (ZF) mit dazwischen liegenden mess- und/oder auswertungsfreien Zwischen-Zeitabständen (ZZ) erfolgt, und
   **dass** die über die Länge eines Zeitfensters (ZF) jeweils berechneten Integralwerte (IW) kumulativ addiert werden und in der Integralwert-Geraden (IWG) die Zwischen-Zeitabstände (ZZ) nicht berücksichtigt werden.

5. Verfahren nach Anspruch 4, **dadurch gekennzeichnet, dass** die Zeitfenster (ZF) mit gleicher Zeitdauer, beispielsweise zwischen 1 bis 3 Stunden pro Tag, mit gleichen entsprechenden Zwischen-Zeitabständen (ZZ) vorgegeben werden.

6. Verfahren nach einem der Ansprüche 1 bis 5, **dadurch gekennzeichnet, dass** der initiale Start-Zeitpunkt ($t_0$) zur Bestimmung des Beginns einer verschleißbedingten Bauteil-Restnutzungsdauer als Versagensgrenze (VG) zeitlich um eine Wartezeit (tw) versetzt nach einer ersten Bauteil-Inbetriebnahme festgelegt wird, so dass nach der Wartezeit (tw) ein anfänglich starker Steifigkeitsabfall der Bauteilsteifigkeit, insbesondere durch Fließen und Setzen, beendet ist.

7. Verfahren nach einem der Ansprüche 1 bis 6, **dadurch gekennzeichnet, dass** zusätzlich zum Warnsignal eine Information über eine weitere, noch unkritische Bauteil-Restnutzungsdauer für eine Weiterbenutzung bis zu einem zwingenden Austausch des Bauteils ausgegeben wird.

8. Verfahren nach einem der Ansprüche 1 bis 7, **dadurch gekennzeichnet, dass** ein Warnsignal als optisches und/oder akustisches und/oder als digitales Signal zur Weiterverarbeitung in einem Steuerungssystem ausgegeben wird.

9. Verfahren nach einem der Ansprüche 1 bis 8, **dadurch gekennzeichnet,**

   **dass** die Bauteiltemperatur ($T_B$) mit einer Temperatursensorik am und/oder im Bauteil gemessen wird und die Umgebungstemperatur (Tu) mit einer Temperatursensorik im Nahbereich des Bauteils gemessen wird, und
   **dass** zumindest ein Teil, vorzugsweise alle der zur Auswertung erforderlichen Einheiten örtlich vom Bauteil beabstandet in einer Recheneinheit als Zentralelektronik des Geräts, angeordnet sind mit einer vorzugsweise kabellosen Messwertübertragung zur Recheneinheit.

**Claims**

1. Method for determining the beginning of a wear-related residual service life of a component as the failure limit of an elastically deformable component, as a bearing part and/or structural part of an appliance, wherein different, successive deformation forces, in particular periodic deformation forces, act on the elastically deformable component in the course of operation, in particular periodic deformation forces acting on the elastically deformable component in the course of operation, which deformation forces lead to component wear limiting the component service life, and the appliance being equipped with a device for determining the component service life, in particular for checking and establishing the start of a wear-related residual service life as a failure limit (VG),

whereby the component is deformed accordingly by the deformation forces acting during operation, so that an energy input takes place through flexing work, which causes the component to heat up, and that a current component temperature $(T_B)$ and, in addition, a current ambient temperature (Tu) is measured at a distance from the component,

from the measured values of the component temperature $(T_B)$ and the ambient temperature (Tu), a measured value for a current differential temperature $(T_D)$ is formed by subtraction as a relative temperature, which is evaluated in the device for determining a failure limit (VG), **characterised in that**

the differential temperature $(T_D)$ is measured continuously over time (t) and the differential temperature measured value is recorded in a differential temperature measurement curve $(f(T_D))$,

that operation- and load-related differential temperature fluctuations in the differential temperature measurement curve $(f(T_D))$ are fitted, i.e. balanced and smoothed, by means of a filter unit as a fit unit, in such a way that a fit differential temperature measurement curve $(f(FT_D))$ is generated,

that an integration unit is used to calculate the integral value (IW) over the fit differential temperature measurement curve $(f(FT_D))$ from an initial start time $(t_0)$ to a current control time $(t_K)$

$$\int_{t_0}^{t_k} f(FT_D) = IW$$

whereby a linear progression of the integral value (IW) as an integral value straight line (IWG) with a specific, constant gradient (S) over the observed measurement and integration time as control time in a, in particular experimentally ascertainable, safe service life period at a distance before a failure limit (VG), results and is stored, that a predetermined control limit value (KW) is added to each integral value (IW) or corresponding to the integral value straight line (IWG) by means of a calculation and comparator unit to form a linear limit value straight line (GWG) which lies at a time interval before a failure limit (VG), parallel with the same gradient (S) and spaced by the limit value (GW) above the integral value straight line (IWG) in the safe service life period, wherein

that the limit value straight line (GWG) in the calculator and comparator unit continues to be stored with the same linear progression determined in the safe service life period with the same gradient (S) over the entire control time and the integral value straight line (IWG) leaves the linear progression with an increase in the gradient (S) when the failure limit (VG) is approached, and

that by comparison at a critical point in time $(t_{krit})$ an intersection of the limit value straight line (GWG) with the integral value straight line (IWG) and thus a reached failure limit (VG) is determined and a warning signal is issued.

2. Method according to claim 1, **characterized in that** a specific, permissible measured value bandwidth (MBB) is specified for the differential temperature measured values, and

that larger or smaller differential temperature measured values are reduced to bandwidth values.

3. Method according to claim 1 or claim 2, **characterised in that** in periods without deformation forces on the elastic component, in particular in standstill and/or switch-off times of the appliance, no differential temperature measurement curve $(f(T_D)$ with subsequent integration is created.

4. Method according to any one of claims 1 to 3, **characterized in that**,

a differential temperature measurement with subsequent generation of a fit differential temperature measurement curve $(f(FT_D)$ and its integration within successive, predefined time windows (ZF) with intermediate time intervals (ZZ) free of measurement and/or evaluation takes place, and

that the integral values (IW) calculated over the length of a time window (ZF) are added cumulatively and the intermediate time intervals (ZZ) are not taken into account in the integral value straight line (IWG).

5. Method according to claim 4, **characterised in that** the time windows (ZF) are predetermined with the same duration, for example between 1 to 3 hours per day, with equal corresponding intermediate time intervals (ZZ).

6. Method according to any one of claims 1 to 5, **characterised in that** the initial start time $(t_0)$ for determining the beginning of a wear-related residual service life of the component is set as a failure limit (VG) offset in time by a waiting time $(t_W)$ after a first component start-up, so that after the waiting time (tw) an initially strong drop in stiffness of the component stiffness, in particular due to flowing and settling, is terminated.

**7.** Method according to one of the claims 1 to 6, **characterised in that**, in addition to the warning signal, information is output about a further, still uncritical remaining service life of the component for further use until a mandatory replacement of the component.

**8.** Method according to any one of claims 1 to 7, **characterised in that** a warning signal is output as an optical and/or acoustic and/or as a digital signal for further processing in a control system.

**9.** Method according to any one of claims 1 to 8, **characterized in that,** the component temperature $(T_B)$ is measured with a temperature sensor system on and/or in the component and the ambient temperature $(T_U)$ is measured with a temperature sensor system in the vicinity of the component, and that at least some, preferably all, of the units required for evaluation are arranged at a distance from the component in a computer unit as the central electronics of the appliance, with a preferably wireless transmission of measured values to the computer unit.

**Revendications**

**1.** Procédé pour déterminer le début d'une durée de vie résiduelle liée à l'usure d'un composant en tant que limite de défaillance d'un composant élastiquement déformable, en tant que pièce de roulement et/ou pièce structurelle d'un appareil, dans lequel différentes forces de déformation successives, en particulier des forces de déformation périodiques, agissent sur le composant élastiquement déformable au cours de son fonctionnement, en particulier des forces de déformation périodiques agissant sur le composant élastiquement déformable en cours de fonctionnement, lesquelles forces de déformation entraînent une usure du composant limitant la durée de vie du composant, et l'appareil étant équipé d'un dispositif pour déterminer la durée de vie du composant, en particulier pour vérifier et établir le début d'une durée de vie résiduelle liée à l'usure en tant que limite de défaillance (VG),

le composant est déformé en conséquence par les forces de déformation agissant pendant le fonctionnement, de sorte qu'un apport d'énergie a lieu par le biais du travail de flexion, ce qui entraîne un échauffement du composant, et qu'une température actuelle du composant $(T_B)$ et, en outre, une température ambiante actuelle $(T_U)$ sont mesurées à une certaine distance du composant,

à partir des valeurs mesurées de la température du composant $(T_B)$ et de la température ambiante $(T_U)$, une valeur mesurée pour une température différentielle actuelle $(T_D)$ est formée par soustraction en tant que température relative, qui est évaluée dans le dispositif pour déterminer une limite de défaillance (VG),

**caractérisé en ce que**
la température différentielle $(T_D)$ est mesurée en continu pendant le temps (t) et la valeur mesurée de la température différentielle est enregistrée dans une courbe de mesure de la température différentielle $(f(T_D))$,
que les variations de température différentielle liées au fonctionnement et à la charge dans la courbe de mesure de la température différentielle $(f(T_D))$ sont ajustées, c'est-à-dire équilibrées et lissées, au moyen d'une unité de filtrage en tant qu'unité d'ajustement, de telle sorte qu'une courbe de mesure de la température différentielle d'ajustement $(f(FT_D))$ est générée,
qu'une unité d'intégration est utilisée pour calculer la valeur intégrale (IW) sur la courbe de mesure de la température différentielle d'ajustement $(f(FT_D))$ à partir d'un temps de démarrage initial $(t_0)$ jusqu'à un temps de contrôle actuel $(t_K)$

$$\int_{t_0}^{t_k} f(FT_D) = IW$$

il en résulte et est mémorisé une progression linéaire de la valeur intégrale (IW) sous la forme d'une ligne droite de valeur intégrale (IWG) avec une pente spécifique et constant (S) sur le temps de mesure et d'intégration observé en tant que temps de contrôle dans une période de durée de vie sûre, en particulier vérifiable expérimentalement, à une distance avant une limite de défaillance (VG),
qu'une valeur limite de contrôle prédéterminée (KW) est ajoutée à chaque valeur intégrale (IW) ou correspondant à la ligne droite de la valeur intégrale (IWG) au moyen d'une unité de calcul et de comparaison pour former une ligne droite de la valeur limite linéaire (GWG) qui se situe à un intervalle de temps avant une limite de défaillance (VG), parallèle avec la même pente (S) et espacée par la valeur limite (GW) au-dessus de la ligne droite de la valeur intégrale (IWG) dans la période de durée de vie sûre, dans laquelle
que la droite de valeur limite (GWG) dans l'unité de calcul et de comparaison continue d'être enregistrée avec la même progression linéaire déterminée dans la période de durée de vie sûre avec la même pente (S) sur l'ensemble du temps de contrôle et que la droite de valeur intégrale (IWG) quitte la progression linéaire avec une augmentation de la pente (S) lorsque la limite de défaillance (VG) est approchée, et que, par comparaison à un moment critique ($t_{krit}$), une intersection de la droite de la valeur limite (GWG) avec la droite de la valeur intégrale (IWG) et donc une limite de défaillance atteinte (VG) est déterminée et un signal d'avertissement est émis.

2. Procédé selon la revendication 1, **caractérisé en ce qu'**une largeur de bande de valeurs de mesure (MBB) spécifique et admissible est spécifiée pour les valeurs de mesure de la température différentielle, et que les valeurs de mesure de la température différentielle, plus ou moins élevées, sont ramenées à des valeurs de largeur de bande.

3. Procédé selon la revendication 1 ou la revendication 2, **caractérisé en ce que** dans les périodes sans forces de déformation sur le composant élastique, en particulier dans les périodes d'arrêt et/ou d'extinction de l'appareil, aucune courbe de mesure de la température différentielle ($f(T_D)$ avec intégration ultérieure n'est créée.

4. Procédé selon l'une quelconque des revendications 1 à 3, **caractérisé en ce que**,

une mesure de la température différentielle avec génération ultérieure d'une courbe de mesure de la température différentielle ajustée ($F(FT_D)$) et son intégration dans des fenêtres de temps successives prédéfinies (ZF) avec des intervalles de temps intermédiaires (ZZ) exempts de mesure et/ou d'évaluation a lieu, et que les valeurs intégrales (IW) calculées sur la durée d'une fenêtre de temps (ZF) sont additionnées cumulativement et que les intervalles de temps intermédiaires (ZZ) ne sont pas pris en compte dans la droite des valeurs intégrales (IWG).

5. Procédé selon la revendication 4, **caractérisée en ce que** les fenêtres de temps (ZF) sont prédéterminées avec la même durée, par exemple entre 1 et 3 heures par jour, avec des intervalles de temps intermédiaires correspondants (ZZ).

6. Procédé selon l'une quelconque des revendications 1 à 5, **caractérisé en ce que** le temps de démarrage initial ($t_0$) pour déterminer le début d'une durée de vie résiduelle du composant liée à l'usure est fixé comme une limite de défaillance (VG) décalée dans le temps par un temps d'attente (tw) après un premier démarrage du composant, de sorte qu'après le temps d'attente (tw) une chute initialement forte de la rigidité du composant, en particulier due à l'écoulement et à l'affaissement, s'arrête.

7. Procédé selon l'une quelconque des revendications 1 à 6, **caractérisé en ce qu'**en plus du signal d'avertissement, des informations sont émises sur la durée de vie restante du composant, qui n'est pas encore critique, en vue d'une utilisation ultérieure jusqu'au remplacement obligatoire du composant.

8. Procédé selon l'une quelconque des revendications 1 à 7, **caractérisée en ce qu'**un signal d'avertissement est émis sous forme de signal optique et/ou acoustique et/ou numérique en vue d'un traitement ultérieur dans un système de contrôle.

9. Procédé selon l'une quelconque des revendications 1 à 8, **caractérisé en ce que**,

la température du composant ($T_B$) est mesurée à l'aide d'un système de capteurs de température sur et/ou dans le composant et la température ambiante ($T_U$) est mesurée à l'aide d'un système de capteurs de température à proximité du composant, et qu'au moins une partie, de préférence la totalité, des unités nécessaires à l'évaluation sont disposées à distance du composant dans une unité informatique en tant qu'électronique centrale de l'appareil, avec une transmission de préférence sans fil des valeurs mesurées à l'unité informatique.

Fig. 1

Fig. 2

Fig. 3

Fig. 4

**IN DER BESCHREIBUNG AUFGEFÜHRTE DOKUMENTE**

**In der Beschreibung aufgeführte Patentdokumente**

- JP H11247951 A
- EP 3358332 B1